# EUROPÄISCHE PATENTANMELDUNG

(11) **EP 0 658 766 A2**
(43) Veröffentlichungstag der Anmeldung: **21.06.1995**
(21) Anmeldenummer: 94116285.1
(22) Anmeldetag: 15.10.1994
(51) Int. Cl.: G01N 31/22

(54) **Verfahren zur Bestimmung von Alkylpolyglycosiden**

(30) Priorität: 17.12.1993 DE 4343186
(71) Anmelder: HÜLS AKTIENGESELLSCHAFT, D-45764 Marl (DE)
(72) Erfinder: Buschmann, Norbert, Dr., D-48147 Münster (DE); Wodarczak, Susann, D-48151 Münster (DE)

(57) **Zusammenfassung**

Erfindungsgemäß werden waschaktive Alkylpolyglycoside mit langkettigen Alkylresten in wäßriger Lösung dadurch bestimmt, daß man ein Farbreagenz auf der Basis eines aromatischen Ketons zusetzt und dann die Intensität der Färbung bestimmt.

## Beschreibung

Die Erfindung betrifft ein neues Verfahren zur Bestimmung des Gehalts an C₈- bis C₂₀-Alkylpolyglycosiden in wäßriger Lösung.

Alkylpolyglycoside sind ungiftige und leicht abbaubare oberflächenaktive Stoffe. Sie werden deshalb als Tenside in Wasch- und Reinigungsmitteln und in Shampoos als Emulgatoren und Dispergatoren verwendet. Sie haben aber nur dann die gewünschten Grenzflächeneigenschaften, wenn die Alkylgruppen mindestens 8 C-Atome aufweisen.

Alkylpolyglycoside mit langkettigen Alkylresten können ganz oder teilweise aus nachwachsenden Rohstoffen hergestellt werden. Sie werden im allgemeinen aus Sacchariden und Alkoholen durch Glycosidierung und Umglycosidierung hergestellt. Bei einem zweistufigen Verfahren wird beispielsweise zunächst durch Glycosidierung mit n-Butanol ein n-Butylglycosid und daraus durch Umglycosidierung mit einem langkettigen Alkohol das gewünschte langkettige Alkylpolyglycosid hergestellt. Man kann die Produkte auch direkt in einem einstufigen Verfahren aus Sacchariden und langkettigen Alkoholen nur durch eine Glycosidierung herstellen.

Nach der Reaktion werden die langkettigen Alkohole destillativ abgetrennt, worauf die Alkylpolyglycoside im allgemeinen in Wasser gelöst und gegebenenfalls nachbehandelt werden.

Nach D. L. Morris, Science 107, 1948, Seiten 254 bis 255, kann die Farbreaktion mit Anthron zur quantitativen Bestimmung von Mono- und Disacchariden, Dextrin, Stärke und Cellulose sowie von Methylglucosid und Acetaten von Mono-, Di- und Polysacchariden genutzt werden. Dabei wird ein Elektrophotometer mit Farbfiltern von 540 oder 620 mµ verwendet.

Desweiteren ist nach O.-E. Schultz und R. Gmelin, Z. Naturforschg. 9b, 1954, Seiten 27 bis 29, bekannt, daß Oxybenzylsenfölglucosid im Senföl mit Hilfe von Anthron quantitativ auf kolorimetrischem Wege bestimmt werden kann.

Darüber hinaus kann man Kohlenhydrate auch mit α-Naphthol, L-Tryptophan, L-Cystein und Schwefelsäure oder mit Diphenylamin und Salzsäure photometrisch bestimmen.

Eine kolorimetrische Bestimmung von unpolaren Alkylpolyglycosiden mit langkettigen Alkylresten ist danach jedoch noch nicht bekannt.

Es ist daher Aufgabe der vorliegenden Erfindung, ein einfaches, schnelles und genaues Verfahren zur Bestimmung langkettiger Alky polyglycoside in wäßriger Lösung bereitzustellen.

Diese Aufgabe wird erfindungsgemäß dadurch gelöst, daß man der wäßrigen Lösung der Alkylpolyglycoside ein Farbreagenz auf der Basis eines aromatischen Ketons zusetzt und dann die Intensität der entstandenen Färbung bestimmt.

Der Saccharidanteil der Alkylpolyglycoside leitet sich beispielsweise von Glucose, Mannose, Fructose, Galaktose oder Gulose her, wobei Glucose bevorzugt wird.

Beispiele für die Alkylsubstituenten sind die Octyl-, Decyl-, Dodecyl-, Tetradecyl- und Hexadecylreste, die auch verzweigt sind können. Vorzugsweise enthalten die Alkylpolyglycoside Alkylreste mit 10 bis 14 C-Atomen.

Der mittlere Polymerisationsgrad der Alkylpolyglycoside liegt im allgemeinen bei 1 bis 5, wobei Polymerisationsgrade von 1,1 bis 3 bevorzugt werden.

Für das erfindungsgemäße Bestimmungsverfahren ist es nur erforderlich, eine gut rührbare wäßrige Alkylpolyglycosid-Lösung vorzulegen. Die Konzentrationsobergrenze liegt deshalb im Bereich einer etwa 70%igen Lösung. Nach unten wird die Konzentration lediglich durch die Nachweisgrenze des verwendeten Reagenzes begrenzt. Vorzugsweise werden wäßrige Lösungen mit 10 bis 0,0001 Gewichtsprozent Alkylpolyglycosiden vorgelegt. Dabei werden Konzentrationen von 1 bis 0,001 Gewichtsprozent besonders bevorzugt.

Geeignete Farbreagenzien sind beispielsweise Acetophenon, Benzophenon, Fluorenon, Anthron, Benzanthron, Naphthochinon-(1,4), Anthrachinon und 1,2-Dihydroxy-anthrachinon. Vorzugsweise werden Anthron und Benzanthron eingesetzt.

Für die erfindungsgemäßen quantitativen Bestimmungen ist, bezogen auf das Alkylpolyglycosid, mindestens die dreifache molare Menge an Farbreagenz erforderlich. Überschüssiges Reagenz stört die Bestimmung nicht.

Bei der praktischen Durchführung der Gehaltsbestimmung wird die Alkylpolyglycosid enthaltende Lösung im allgemeinen zunächst angesäuert und dann zusammen mit dem Reagenz erhitzt. Dabei entsteht eine Färbung, deren Intensität nach Abkühlung der Lösung bestimmt wird.

Vorzugsweise wird eine absorptionsspektroskopische Untersuchung durchgeführt. Dabei wird eine Gehaltsbestimmung der Lösung über die Messung der Lichtschwächung bei einer bestimmten Wellenlänge vorgenommen. Die bei Verwendung von Anthron erhaltene grüne Färbung wird vorzugsweise im Wellenlängenbereich von 600 bis 650 nm, ganz besonders bevorzugt bei 620 bis 630 nm, gemessen. Für derartige Messungen können alle üblichen Photometer verwendet werden. Sie können Leuchtdioden mit einer geeigneten Emissionswellenlänge oder auch Filter oder Gitter zur Auswahl der Emissionswellenlänge enthalten. Als Leuchtdioden werden vorzugsweise solche mit einer Emissionswellenlänge von 625 nm (orange) eingesetzt. Dadurch kann ein sehr einfaches und preiswertes Photometer verwendet werden.

Das vorliegende Verfahren ermöglicht die Bestimmung insbesondere von kleinen Alkylpolyglycosid-Gehalten in Wasch- und Reinigungsmitteln, in Shampoos und anderen Tensidgemischen. Die Methode ist schnell, erfordert keinen großen Aufwand und liefert die Gehalt mit guter Genauigkeit und Reproduzierbarkeit.

Die folgenden Beispiele sollen die Erfindung erläutern.

### Beispiel 1

Reagenzlösung: 80 mg Anthron werden in 100 ml 80%iger warmer Schwefelsäure gelöst.

In einem 100-ml-Kolben wird 1 ml einer wäßrigen Lösung vorgelegt, die 30 µg C₈/C₁₀-Alkylpolyglucosid (Polymerisationsgrad 1,2) enthält. Die Lösung wird mit 1 ml konzentrierter Salzsäure und 0,1 ml Ameisensäure versetzt. Anschließend wird mit 8 ml Reagenzlösung unterschichtet. Nach vorsichtigem Umschwenken bis zur Beendigung der Gasentwicklung wird exakt 12 Minuten lang auf dem siedenden Wasserbad erhitzt. Anschließend wird im Eisbad auf Raumtemperatur abgekühlt. Nach 5minütigem Rühren zur Entfernung von Luftblasen wird die Intensität der Grünfärbung in einer 1-cm-Küvette bei einer Wellenlänge von 625 nm gegen eine Blindlösung gemessen.

### Beispiele 2 bis 7

Beispiel 1 wird wiederholt mit der Änderung, daß die vorgelegte Lösung eine andere Menge an C₈/C₁₀-Alkylpolyglucosid enthält.

### Beispiel 8

Es wird wie in Beispiel 1 verfahren. Die vorgelegte Lösung enthält jedoch 120 µg C₁₂/C₁₄/C₁₆-Alkylpolyglucosid (Polymerisationsgrad 1,3).

Die gemessenen Extinktionen der Beispiele 1 bis 8 sind in Tabelle 1 zusammengefaßt.

**Tabelle 1**

| Beispiel | Konzentration [µg/ml] | Extinktion |
|---|---|---|
| 1 | 30 | 0,094 |
| 2 | 48 | 0,148 |
| 3 | 61 | 0,190 |
| 4 | 75 | 0,235 |
| 5 | 91 | 0,278 |
| 6 | 121 | 0,364 |
| 7 | 151 | 0,466 |
| 8 | 120 | 0,366 |

Die Tabelle zeigt, daß die Extinktion der Lösung im Bereich von 30 bis 150 µg/ml Alkylpolyglucosid linear von der Alkylpolyglucosid-Konzentration abhängig ist.

## Patentansprüche

1. Verfahren zur Bestimmung des Gehalts an C₈- bis C₂₀ Alkylpolyglycosiden in wäßriger Lösung,
dadurch gekennzeichnet,
daß man ein Farbreagenz auf der Basis eines aromatischen Ketons zusetzt und dann die Intensität der entstandenen Färbung bestimmt.

2. Verfahren nach Anspruch 1,
dadurch gekennzeichnet,
daß man als Farbreagenz Anthron oder ein substituiertes Anthron zusetzt.

3. Verfahren nach Anspruch 1,
dadurch gekennzeichnet,
daß man die Färbung absorptionsspektroskopisch bestimmt.
